(19) Europäisches Patentamt
European Patent Office
Office européen des brevets

(11) Publication number: **0 060 817 A1**

(12) **EUROPEAN PATENT APPLICATION**

(21) Application number: **82830049.1**

(22) Date of filing: **09.03.82**

(51) Int. Cl.³: **B 22 C 1/22**, C 08 L 75/02

(30) Priority: **09.03.81 IT 935681**

(43) Date of publication of application: **22.09.82**
**Bulletin 82/38**

(84) Designated Contracting States: **BE DE FR GB NL**

(71) Applicant: **INDUSTRIA CHIMICA CARLO LAVIOSA della CARLO LAVIOSA S.p.A., Scali d'Azeglio 6, I-57100 Livorno (IT)**

(72) Inventor: **Novelli, Giovanni, Via Pacinotti 52/a, I-57100 Livorno (IT)**
Inventor: **Rinaldi, Athos, Borgo S. Iacopo 175, I-57100 Livorno (IT)**
Inventor: **Pareschi, Gondrano, Via Conciliazione 5, I-20100 Milano (IT)**

(74) Representative: **Bardini, Marco Luigi et al, c/o Società Italiana Brevetti S.p.A. Corso dei Tintori 25, I-50122 Firenze (IT)**

(54) **A method for the production of cores and molds in foundry.**

(57) A method for the production of cores and molds in foundry starting from molding mixtures based on a foundry sand and a polyisocianate compound or a prepolymer containing free isocyanate groups, which mixture is then hardened through contact with water both liquid and as steam. The process allows the production of cores and moulds with good technologic characteristics and does not involve any pollution problem for the work environment.

EP 0 060 817 A1

0060817

INDUSTRIA CHIMICA CARLO LAVIOSA
della CARLO LAVIOSA S.p.A.

A method for the production of cores and molds in foundry.

The present invention relates to a new method for the production of cores and molds in foundry.

The invention concerns also the cores and molds produced according to the above method.

As it is known, among the various processes known in foundry for the manufacture of cores and molds, particular importance is attached to those which employ the blowing in of suitable gaseous products in molding mixtures formed by a foundry sand, such as siliceous sand, of olivine, of zircon, of sillimanite, of mullite and similar ones, and by a suitable organic or inorganic binder, as this gaseous product reacts with the binder, or anyway activates a process of reticulation of the last, thus causing hardening of the molding mixture.

According to the gas used to obtain the hardening of

said mixtures, the following processes may be distinguished:

1. Carbon dioxide process, where the binder is of inorganic nature and is essentially constituted by sodium silicate, to which carbohydrates are eventually added as additives;

2. Volatile amines process (for example trimethylammin), where a phenolic resin is reticulated with a polyisocyanate;

3. Sulphur dioxide process, where a phuranic, phenolic or phenolphuranic resin is reticulated using organic peroxid as activator;

4. Borontrifluoride process, where a phuranic, phenolic or phenolphuranic resin is reticulated according to a cationic mechanism started by boron fluoride;

5. Process using a resin or a mixture of hydroxyled and carboxyled resins hardened with blowing in of carbon dioxide.

With particular regard to the volatile amines process, the molding mixtures employed for the manufacture of the core or of the mold, is prepared mixing, according to known composition ratio, a foundry sand of the above kind with a suitable binder constituted by a mixture of a di- or triisocyanate and a polyhydrossylate compound. The two elements constituting the binder tend to react with each other, but the reaction speed, at room temperature and with lack of catalysts, is very slow and then the mixture bench-life is enough to allow the normal foundry operations (homogenizing, etc.). Only when the molding mixture is injected ("blown") into a core box and blown in with a catalyst based on gasified amins, the hardening

is shortly obtained according to the reaction

O=C=N-R-N=C=O+HO-R-HO $\xrightarrow{RNH2}$

$\xrightarrow{.RNH2}$ O=C=N-R-NH-C(=O)-O-R-OH

As volatile ammins, dimethylammin, trymethylammin, isobutylammin and similar ones can be particularly employed.

On the other side it is known that this process presents the serious disadvantage of a high pollution load expecially with regard to the working environment. In fact, it presents always volatile ammins vapours, which are notoriously noxiuos or toxic, and moreover smell extremely bad so that the product maintains the smell itself even during the storage. In order to limit this disadvantage, at present particularly complex precautions are to be taken, which weighs heavily on the production cost of the cores and moulds themselves.

A new process, contituting the subject of the present invention, has now set up for the preparation of cores and moulds in foundry starting from moulding mixtures employing a binder based on compounds containing several free isocyanic groups (-N=C=O), permitting to obviate the above disadvantage.

The fundamental characteristic of the new process consists in that the stage of hardening of the moulding mixture takes place through contact of the last one with water both liquid and as vapour. The moulding mixture is moreover formed by a sand of the type usually employed for the manufacture of cores and mouldings in foundry, suitably taken to homogenizing with a binder constituted by a di- or triisocyanate or alternatively by a prepolymer containing isocyanic groups obtained making the above isocyanates react with an excess, with regard to the

stoichiometric, of polyoils, polyesters and polyossidrilate materials in general.

The reaction of reticulation of the binder, causing the hardening of the moulding mixture, can be divided into two stages, in the first of which water, reacting with an isocyanic group present in the isocyanate compound or in the prepolymer, forms an amminic group and frees carbon dioxide, in the second one the amminic group reacts with one more isocyanic group giving rise to an intermediate which can react further on with water or with another amminic group, quickly going on towards the formation of a reticulated polymer able to cause the hardening of the mixture. The general scheme of reaction shall be then the following:

$$R-N=C=O+H_2O \longrightarrow R-NH_2+CO_2$$

$$R-NH_2+R-N=C=O \longrightarrow R-NH-\underset{\overset{\|}{O}}{C}-NH-R$$

where R is a radical containing further free isocyanic groups. The procedure of the production of cores and mouldings in foundry according to the present invention is therefore characterized by these operations: mixing a foundry sand with a compound containing various free isocyanic groups so that a moulding mixture is obtained; homogenizing the moulding mixture obtained like that and; putting the above mixture in contact with water at the moment of the injection into a mould or a core box.

Particularly, employing liquid water, it can be added to the moulding mixture immediately before the injection into the mould, ramming then with care the wet mixture within it, alternatively the water can be put in contact with the moulding mixture after being nebulized or anyway carried into a gaseous inert current previously humidified.

On the contrary, employing water at the state of vapour,

superheated low pressure steam, that is of about 1-5 atm., can be employed with great advantage.

Putting the invention into practice, in order to quicken the reaction between polyisocyanate and water, or alternatively steam, the above polyisocyanate compounds are added to catalysts based on no-volatile amminis, such as, for example, triethylendiammin, or to "metallic soaps", that is organic salts based on heavy metals such as cobalt, manganese, zinc, tin, of the type of naphtenates, octoates, laurates variously substituted, such as, for example tin dibuthyllaurate.

Should water be supplied as seam, it is preferable to make a further operation of washing with dry gas, such as nitrogen, carbon dioxide, dry air, in order to eliminate traces of condensation water from the mould or the core.

The cores and moulds produced according to the above described procedure, complete their hardening in times technologically satisfactory and present very good mechanical characteristics and anyway comparable with those which can be obtained with the volatile ammins process.

According to the practice of the present invention, the quantity of polyisocyanate compound in the moulding mixture shall have to be between 1 and 10% weight, particularly preferab:y between 1.5 and 4%.

As concerns the above catalysts employed to quicken the reaction between polyisocyanate and water, the percentage quantity of them employed in the moulding mixtures is included between 0.1 and 10% and preferably between 1 and 5% weight with regards to the quantity of polyisocyanate compound employed. The quantity of

water employed is generally between 0.5 and 5% with respect to the weight of polyisocianate compount, while it is in excess with regard to the stoichiometric requirement, if supplied as steam. The hardening time is from 5 and 30 minutes, according to the water quantity employed.

Here following down some practical examples of application of the procedure, according to the invention, are given.

Example 1. 100 kg of siliceous sand, having a fineness modulus AFS 55/60 and a silica content not lower than 80%, have been mixed with 2 kg of 1-4 diphenylmetandiisocyanate in liquid form, to which 20 g of trienthylendiammin in no-volatile solvent has been addedd as catalyst. The mixture has a life of 10/30 minutes, as there are a room moisture and a moisture of the sands which start the hardening reaction.

With this mixture specimens have been prepared in which steam at the pressure of 1.5 atm has been blown. The hardening has taken place in 30 seconds. The following mechanical characteristics have been measured:
tensile strength, $kg/cm^2$: 20.5
flexion strength, $kg/cm^2$: 45.0

Example 2. 100 kg of siliceous sand with characteristics as in example 1, are mixed with 2 kg of 1-4 diphenylmetandiisocyanate in liquid form to which 20 g of tin dibuthyldilaurate are added as catalyst. Also this mixture has a bench-life of 20/30 minutes. It has been used to make specimens which have been blown in with low pressure steam; the following mechanical characteristics have been measured:
tensile strength, $kg/cm^2$: 18.5
flexion strength, $kg/cm^2$: 45.0

./..

Example 3. 100 kg of siliceous sand with characteristisc as in example 1 have been mixed with 2 kg. of a prepolymer prepared making 5 moles of 1-4 diphenilmentandiysocianate react with one mole of linear polyesther of molecular weight approximately equal to 2,000 in presence to 20 g of tin dibuthyldilaurate.

The mixtrue served to make specimens which hardened in 15/20 seconds after the blowing in of steam at the pressure of 1.2 atm.

The mechanical characteristics measured on samples produced are the following:
tensile strength, $kg/cm^2$: 22
flexion strength, $kg/cm^2$: 39

Example 4. A moulding mixture has been prepared adding to 100 kg of siliceous sand, with characteristics as in example 1, 2 kg of 1-4 diphenylmetandiisocyanate in liquid form and 20 g of dibuthyldilaurate of tin. 40 g of water are added to this mixture. The resulting mexture is immeted in a core box and here well blown in. After about 15 minutes the core, already hardened, is drawn out.
From the tests of mechanical strength made on specimens prepared as above said, the following results have been obtained:
tensile strength, $kg/cm^2$: 20
flexion strength, $kg/cm^2$: 41

At last we have to point out that the water necessary to activate the hardening process can be supplied also indirectly to the moulding mixture, employing substances able to release water "in situ", such as for example hydrogen peroxide or salts containing molecules of water of crystallization.

CLAIMS

1. A method for the production of cores and moulds in foundry characterized by the fact that it includes the steps of: mixing a foundry sand with a compound containing various free isocianic groups, so that a moulding mixture is obtained; homogenizing the moulding mixture obtained; putting this moulding mixture in contact with water at the moment of the injection into a mould or core box.

2. A method according to claim 1, wherein the above moulding mixture is mixed with liquid water and then blown in the suitable mould or core box.

3. The method according to claim 1, wherein the above moulding mixture is blown in with steam after the injection into the mould or core box.

4. The method according to claim 3,wherein low pressure superheated steam is used.

5. The method according to claim 4, wherein, after the operation of blowing in with steam, washing of the core or of the mould with dry gas is carried out.

6. The method according to claim 1, wherein a no-volatile ammin is furtherly added to the above moulding mixture.

7. The method according to claim 1, wherein a metallic soap is furtherly added to the above moulding mixture.

8. The method according to claim 7, wherein the above metallic soap is preferable choosen among naphtenates, octoates, dilaurates of heavy metals such as cobalt, manganese, zinc, tin or mixtures thereof.

9. The method according to claim 1, where the above compound containing free isocyanic groups is preferably choosen among di- and triisocyanates compounds.

10. The method according to claim 1, where the above compound containing free isocyanic groups, is a prepolumer obtained making a polyisocyanate react with an excess on the stoichiometric of polyoils, polyesthers, polyossidrilate compounds.

11. A moulding mixture for the production of cores and moulds in foundry, characterized by being constituted by a foundry sand and a compound containing free isocianic groups according to the following percentage composition in weight:

| | |
|---|---|
| sand | 90-99% |
| compound with free isocyanic groups | 1-10% |

12. The moulding mixture according to claim 11, wherein the quantity of compound containing free isocyanic groups is particularly between 1.5 and 4% in weight.

13. The moulding mixture according to claim 11 also containing a no-volatile ammin in a weight percentage between 0.1 and 10% with regard to the weight of the compound with free isocyanic groups.

14. The moulding mixture according to claim 13, wherein the weight percentage of said no-volatile ammin is particularly between 1 and 5% with regard to the weight of the compound with free isocyanic groups.

15. The moulding mixture according to claim 11, including also a metallic soap in a weight percentage between 0.1 and 10% with regard to the weight of the compound with free isocyanic groups.

16. The moulding mixture according to claim 15, wherein the weight percentage of the above metallic soap is particularly between 1 and 5% with regard to the weight of the compound with free isocyanic groups.

17. The moulding mixture according to claim 16, where said metallic soap is choosen among naphtenates, octoates, dilaurates of heavy metals such as zing, cobalt, manganese, tin.

18. Core and moulds for foundry obtained according to the method as claimed in anyone of claims from 1 to 10.

19. Cores and moulds for foundry obtained starting from moulding mixtures as claimed in anyone of claims from 11 to 17.

0060817

Application number

European Patent Office

# EUROPEAN SEARCH REPORT

EP 82 83 0049

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-H- 864 002 (M.L. BROWN)<br>* the whole document *<br>--- | 1,2,6-19 | B 22 C 1/22<br>C 08 L 75/02 |
| X | DE-A-2 040 437 (DEUTSCHE TEXACO)<br>* the whole document *<br>--- | 1-5,9-12,18,19 | |
| X | DE-B-1 804 138 (GEBR. HUTTENES K.G.)<br>* the whole document *<br>--- | 1-6,10-14,18,19 | |
| A | US-A-4 148 777 (R.A. LABAR)<br>* column 3, lines 63-68; column 7, lines 67-68; column 8, lines 1-17 *<br>----- | 1,6-8,11-19 | |
| | | | TECHNICAL FIELDS SEARCHED (Int. Cl. 3) |
| | | | B 22 C 1/22<br>C 08 L 75/02 |

The present search report has been drawn up for all claims

| Place of search | Date of completion of the search | Examiner |
|---|---|---|
| THE HAGUE | 17-06-1982 | SCHURMANS H.D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82